(19) **Europäisches Patentamt**

**European Patent Office**

**Office européen des brevets**

(11) **EP 1 732 340 A1**

(12) **EUROPEAN PATENT APPLICATION**
published in accordance with Art. 158(3) EPC

(43) Date of publication:
**13.12.2006 Bulletin 2006/50**

(51) Int Cl.:
*H04Q 7/38* (2006.01)          *H04L 29/08* (2006.01)
*H04Q 7/36* (2006.01)

(21) Application number: **05720922.3**

(22) Date of filing: **16.03.2005**

(86) International application number:
**PCT/JP2005/004671**

(87) International publication number:
**WO 2005/099296 (20.10.2005 Gazette 2005/42)**

(84) Designated Contracting States:
**DE FR GB**

(30) Priority: **30.03.2004 JP 2004099341**

(71) Applicant: **MATSUSHITA ELECTRIC INDUSTRIAL CO., LTD.**
**Osaka 571-8501 (JP)**

(72) Inventors:
• **TAMURA, Tomofumi**
**Matsushita Electric Industrial Co**
**Chuo-ku, Osaka 540-6319 (JP)**

• **FUKUI, Akito**
**Matsushita Electric Industrial Co**
**Chuo-ku, Osaka 540-6319 (JP)**

(74) Representative: **Grünecker, Kinkeldey,**
**Stockmair & Schwanhäusser**
**Anwaltssozietät**
**Maximilianstrasse 58**
**80538 München (DE)**

(54) **RADIO BASE STATION APPARATUS AND DATA TRANSFER CONTROL METHOD**

(57)    A radio base station apparatus (10), capable of improving the throughput, receives data transferred from a wireless network control apparatus (30) via a wire transmission path having a predetermined band and wireless transmits the received data to a mobile terminal apparatus via a wireless transmission path. In the radio base station apparatus (10), a band usage ratio measuring part (109) measures the usage status of the band of the wire transmission path. A first upper limit value setting part (110) sets, based on a result of the measurement by the band usage ratio measuring part (109), a first upper limit value of the transfer rate of the data transferred from the wireless network control apparatus (30) for the wire transmission path. An FP rate deciding part (111) decides, based on the set first upper limit value, the transfer rate.

FIG.3

EP 1 732 340 A1

**Description**

Technical Field

The present invention relates to a radio base station apparatus and data transfer control method used in a mobile communication system in which a best effort type transmission scheme is applied to communication between a mobile terminal apparatus and a radio network control apparatus.

Background Art

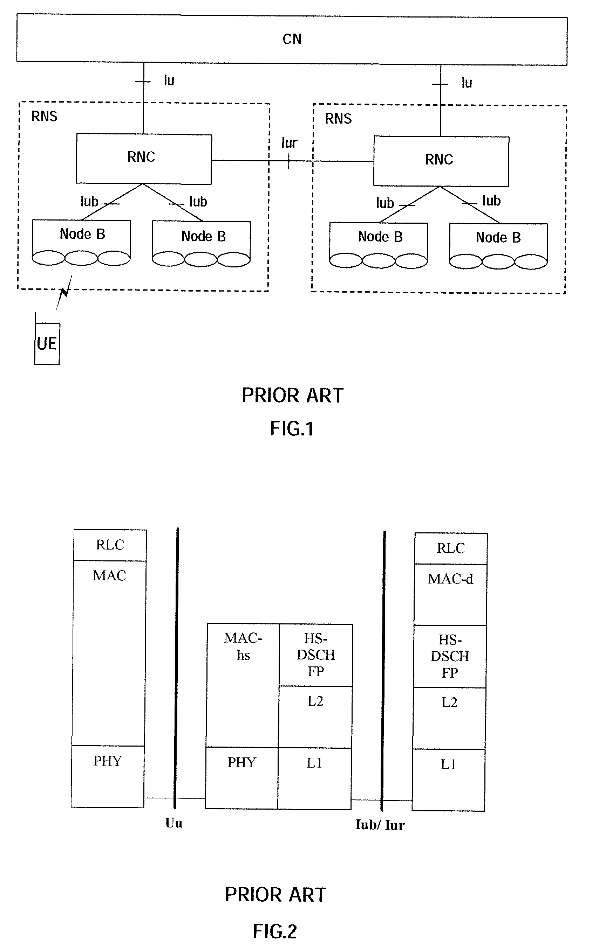

An example of a technology for performing high-speed data (packet) transfer in a W-CDMA (Wideband - Code Division Multiple Access) mobile communication system is HSDPA (High Speed Downlink Packet Access). HSDPA is applied to a mobile communication system such as that shown in FIG.1, for example, comprising a mobile terminal apparatus (UE), radio base station apparatuses (Node B), radio network control apparatuses (RNC) that control the radio base station apparatuses, and a core network (CN) that performs mobile terminal apparatus location management, call control, and so forth (see Non-patent Document 1, for example). In this kind of mobile communication system, data is transferred on an interface (Iub) between a radio base station apparatus and radio network control apparatus via a packet transfer apparatus such as a router or a drift radio network control apparatus (DRNC).

In HSDPA, a high-speed downlink from a radio base station apparatus to a mobile terminal apparatus is achieved by applying adaptive modulation, H-ARQ (Hybrid - Automatic Repeat reQuest), high-speed selection of a communication-destination mobile terminal apparatus, adaptive control of transfer parameters according to the wireless channel status, and so forth, to a wireless channel. Also, HSDPA has a so-called "best effort" type communication mode, which is a transmission scheme whereby one wireless channel is shared by a plurality of mobile terminal apparatuses. Specifically, a plurality of mobile terminal apparatuses report the downlink channel status to a radio base station apparatus, and the radio base station apparatus schedules the order of data transmission to the plurality of mobile terminal apparatuses based on the contents of the reports, and performs data transmission accordingly.

The user plane when HSDPA is applied to a mobile communication system is as shown in FIG.2, for example, comprising a protocol structure in which an HS-DSCH/FP layer (High Speed - Downlink Shared CHannel Frame Protocol) is provided in radio base station apparatuses and radio network control apparatuses (see Non-patent Document 2, for example). In this layer, Iub interface flow control is performed (see Non-patent Document 3, for example). With HSDPA, which implements high-speed data transmission in a wireless section between a mobile terminal apparatus and a radio base station apparatus, there is a requirement for improved data transmission throughput in a wired section between a radio base station apparatus and a radio network control apparatus.

An example of conventional data transfer control for meeting the above requirement is outlined below.

A radio network control apparatus (hereinafter referred to simply as "control apparatus") temporarily stores data input from the core network in a buffer, generates an FP frame in accordance with predetermined control, and transfers this to a radio base station apparatus (hereinafter referred to simply as "base station"). At this time, an FP frame is transferred at a preset FP frame transfer rate (hereinafter referred to as "FP rate"). An FP frame reaches the base station via a packet transfer apparatus. In the base station, data is extracted from a received FP frame by executing MAC-hs (Medium Access Control used for high speed) processing on that frame. The extracted data is transmitted from the base station to a mobile terminal apparatus (hereinafter referred to simply as "mobile station") via a wireless channel in accordance with scheduling decided based on downlink wireless channel conditions.

In the base station, also, the average transmit data rate of a downlink wireless section is measured periodically. Then an upper limit for the FP rate is set based on the quantity of data stored in the buffer and the average transmit data rate, and the FP rate is set based on this upper limit. A request for FP frame transfer at this FP rate is then made to the control apparatus, and the control apparatus executes FP frame transfer at the requested FP rate.

In this control, the FP rate is changed dynamically according to the quantity of stored data and the average transmit data rate. In this way, the frequency with which a buffer in the base station overflows or becomes empty due to fluctuation of the transmit data rate of a downlink wireless section can be reduced.

Non-patent Document 1: 3GPP, TS25.401 UTRAN overall description, V3.10.0

Non-patent Document 2: 3GPP, TS25.308 High Speed Downlink Packet Access (HSDPA); Overall description; Stage 2, V5.4.0

Non-patent Document 3: 3GPP, TS25. 435 UTRAN Iub interface user plane protocols for Common Transport Channel data streams, V5.5.0

Disclosure of Invention

Problems to be Solved by the Invention

However, with the above-described conventional data transfer control, it may not be possible to secure an adequate band in Iub interface wired transmission path for the FP rate set by a base station. In this case, an FP frame is transferred at an FP rate exceeding the band that can be used in the wired transmission path, resulting in congestion on the wired transmission path and retention of an excessive quantity of FP frames in a buffer within a packet transfer apparatus in the wired transmission path. Alternatively, buffer overflow may occur, which causes FP frames to be discarded. There is thus a certain limit to improvement of throughput.

It is an object of the present invention to provide a radio base station apparatus and data transfer control method that enable throughput to be improved.

Means for Solving the Problems

A radio base station apparatus of the present invention receives data transferred from a radio network control apparatus via a wired transmission path having a predetermined band and performs wireless transmission of the data to a mobile terminal apparatus via a wireless transmission path, and has a configuration comprising: a measuring section that measures the usage state of the band; a first upper limit setting section that sets a first upper limit of the transfer rate of the data, associated with the wired transmission path, based on the measurement result of the measuring section; and a determination section that determines the transfer rate based on the set first upper limit.

A data transfer control method of the present invention is a data transfer control method that is implemented in a radio base station apparatus that receives data transferred from a radio network control apparatus via a wired transmission path having a predetermined band and performs wireless transmission of the data to a mobile terminal apparatus via a wireless transmission path, and has : a measuring step of measuring the usage state of the band; a first upper limit setting step of setting a first upper limit of the transfer rate of the data, associated with the wired transmission path, based on the measurement result of the measuring step; and a determining step of determining the transfer rate based on the first upper limit set in the first upper limit setting step.

Advantageous Effect of the Invention

The present invention enables throughput to be improved.

Brief Description of Drawings

FIG.1 is a block diagram showing an example of the configuration of a mobile communication system to which HSDPA is applied;

FIG.2 is a drawing showing an example of the user plane protocol configuration when HSDPA is applied to a mobile communication system;

FIG.3 is a block diagram showing the configuration of a mobile communication system that includes a radio base station apparatus according to Embodiment 1 of the present invention;

FIG. 4 is a flowchart showing the operation of a first upper limit setting section in a radio base station apparatus of this embodiment;

FIG. 5 is a drawing for explaining a first upper limit change operation in a first upper limit setting section of this embodiment;

FIG.6 is a block diagram showing the configuration of a mobile communication system that includes a radio base station apparatus according to Embodiment 2 of the present invention;

FIG. 7 is a flowchart showing the operation of a first upper limit setting section in a radio base station apparatus of this embodiment; and

FIG.8 is a drawing for explaining a first upper limit change operation in a first upper limit setting section of this embodiment.

Best Mode for Carrying Out the Invention

Embodiments of the present invention will now be described in detail with reference to the accompanying drawings.

(Embodiment 1)

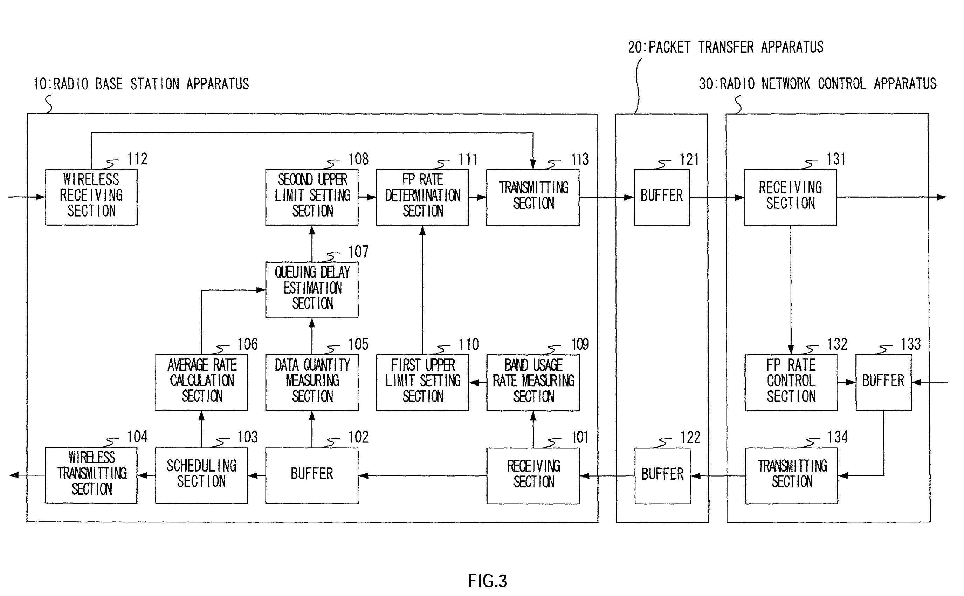

FIG.3 is a block diagram showing the configuration of a mobile communication system that includes a radio base station apparatus according to Embodiment 1 of the present invention. The mobile communication system in FIG. 3 has a radio base station apparatus (base station) 10, a packet transfer apparatus 20, and a radio network control apparatus (control apparatus) 30.

Base station 10 has a receiving section 101, a buffer 102, a scheduling section 103, a wireless transmitting section 104, a data quantity measuring section 105, an average rate calculation section 106, a queuing delay estimation section 107, a second upper limit setting section 108, a band usage rate measuring section 109, a first upper limit setting section 110, an FP rate determination section 111, a wireless receiving section 112, and a transmitting section 113.

Packet transfer apparatus 20 transfers FP frames exchanged over the Iub interface, and has a buffer 121 that temporarily stores an FP frame transferred from base station 10 to control apparatus 30 via a wired transmission path and sends that FP frame to control apparatus 30, and a buffer 122 that temporarily stores an FP frame transferred from control apparatus 30 to base station 10 via a wired transmission path and sends that FP frame to base station 10.

Control apparatus 30 has a receiving section 131 that receives an FP frame sent from buffer 121 and, when data is extracted from that FP frame, sends that data to the core network; an FP rate control section 132 that acquires FP rate information shown in an HS-DSCH capacity allocation message contained in a received FP frame, and controls the FP rate from control apparatus 30 to base station 10 in accordance with that FP rate information; a buffer 133 that temporarily stores data received from the core network, and sends stored data in accordance with control by FP rate control section 132; and a transmitting section 134 that assembles an FP frame using data from buffer 133, and transmits that FP frame via a wired transmission path.

In base station 10, receiving section 101 receives an FP frame sent from buffer 122 and extracts data from that frame. Buffer 102 temporarily stores data from receiving section 101. Data stored in buffer 102 is input to wireless transmitting section 104 in accordance with scheduling determined by scheduling section 103, and after predetermined wireless processing has been executed by wireless transmitting section 104, is transmitted to a mobile terminal apparatus (mobile station) via a wireless transmission path.

Data quantity measuring section 105 measures the quantity of data stored in buffer 102. The measured quantity of data is reported to queuing delay estimation section 107. Based on information from scheduling section 103, average rate calculation section 106 calculates the average transmission rate of data transmitted by wireless transmission to a mobile station. The calculated average transmission rate may be the actual average transmission rate or may be a virtual average transmission rate. The calculated average transmission rate is reported to queuing delay estimation section 107.

Queuing delay estimation section 107 obtains a queuing delay estimate by estimating the queuing delay based on the measured quantity of data and the calculated average transmission rate.

Based on the obtained queuing delay estimate, second upper limit setting section 108 sets the FP rate upper limit to be requested to control apparatus 30. As the upper limit set by second upper limit setting section 108 is related to the transmission rate of data transmitted by wireless transmission via a wireless transmission path and the stored quantity thereof, it is an upper limit corresponding to the wireless transmission path. Hereinafter, this upper limit is referred to as the "second upper limit."

Band usage rate measuring section 109 measures the band usage state of a wired transmission path by monitoring the FP frame reception status in receiving section 101. In this embodiment, a band usage rate is calculated as an index indicating the band usage state.

To be more specific, wired transmission path throughput is measured periodically, and the band usage rate is calculated by means of Equation (1) below. Using actual measured values of wired transmission path throughput in this way enables calculation of the band usage rate to be performed more accurately. The calculated band usage rate is reported to first upper limit setting section 110.

$$(\text{Band usage rate}) = (\text{actual measured throughput value}) / (\text{wired transmission path band}) \ldots \text{Equation (1)}$$

Based on the calculated band usage rate, first upper limit setting section 110 sets the FP rate upper limit to be requested to control apparatus 30. As the upper limit set by first upper limit setting section 110 is based on the band usage rate of a wired transmission path, it is an upper limit corresponding to the wired transmission path. Hereinafter, this upper limit is referred to as the "first upper limit." The operation of first upper limit setting section 110 will be described later herein.

Based on the set first upper limit and second upper limit, FP rate determination section 111 determines the FP rate to be requested to control apparatus 30, and generates an HS-DSCH capacity allocation message containing information indicating the determined FP rate.

To be more specific, FP rate determination section 111 compares the first upper limit and second upper limit, and determines the one of these with the smaller value to be the FP rate to be requested to control apparatus 30. As the FP rate is determines based on a first upper limit set as associated with a wired transmission path in this way, the FP rate can be prevented from rising to an undesirable level. Furthermore, since the FP rate is determined based on a second upper limit set as associated with a wireless transmission path, the FP rate can be prevented with greater certainty from rising to an undesirable level.

Wireless receiving section 112 receives data transmitted by wireless transmission from a mobile station. Transmitting section 113 generates an FP frame using an HS-DSCH capacity allocation message from FP rate determination section 111, and transmits this FP frame to buffer 121. Also, when data is input from wireless receiving section 112, transmitting section 113 generates an FP frame using that data and transmits that frame to buffer 121.

Receiving section 101 and transmitting section 113 are a section that executes HS-DSCH/FP layer processing. Buffer 102, scheduling section 103, data quantity measuring section 105, average rate calculation section 106, queuing delay estimation section 107, second upper limit setting section 108, band usage rate measuring section 109, first upper limit setting section 110, and FP rate determination section 111 are a section that executes MAC-hs layer processing.

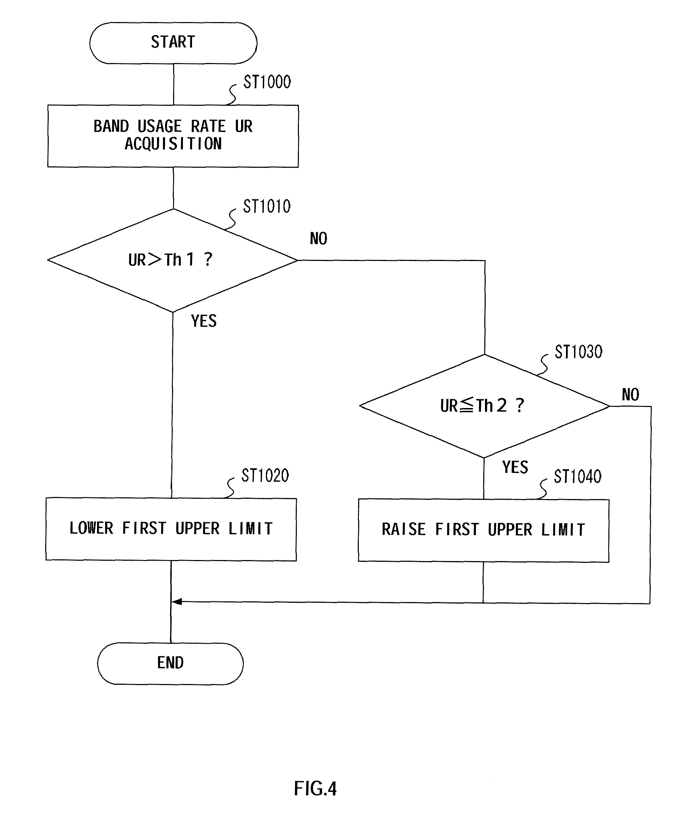

The operation of first upper limit setting section 110 in base station 10 with the above configuration will now be described. FIG.4 is a flowchart for explaining an FP rate upper limit change operation in first upper limit setting section 110.

First, in step ST1000, band usage rate UR is acquired from band usage rate measuring section 109. Then, in step ST1010, band usage rate UR is compared with a threshold value Th1 stored beforehand. If the result of this comparison is that band usage rate UR is greater than threshold value Th1 (ST1010: YES), the FP rate first upper limit is lowered in step ST1020. On the other hand, if band usage rate UR is less than or equal to threshold value Th1 (ST1010: NO), the processing flow proceeds to step ST1030.

In step ST1030, band usage rate UR is compared with another threshold value Th2 stored beforehand (Th1<Th2). If the result of this comparison is that band usage rate UR is less than or equal to threshold value Th2 (ST1030: YES), the FP rate first upper limit is raised in step ST1040. On the other hand, if band usage rate UR is greater than threshold value Th2 (ST1030: NO), the FP rate first upper limit is not changed. This series of processing steps is executed in a cycle having a predetermined duration. Hereinafter, this cycle is referred to as the "comparison cycle." The comparison cycle should preferably be synchronized with the band usage rate UR calculation cycle.

As the first upper limit is lowered when band usage rate UR is greater than threshold value Th1 and raised when band usage rate UR is smaller than threshold value Th2 in this way, congestion on a wired transmission path can be prevented, and the wired transmission path band can be used efficiently. In this embodiment, band usage rate UR is compared with threshold value Th1 before being compared with threshold value Th2, but the order of comparison is not limited to this. The same kind of operational effect as described above can be achieved if band usage rate UR is compared with threshold value Th2 before being compared with threshold value Th1, or if band usage rate UR is compared with threshold values Th1 and Th2 at the same time.

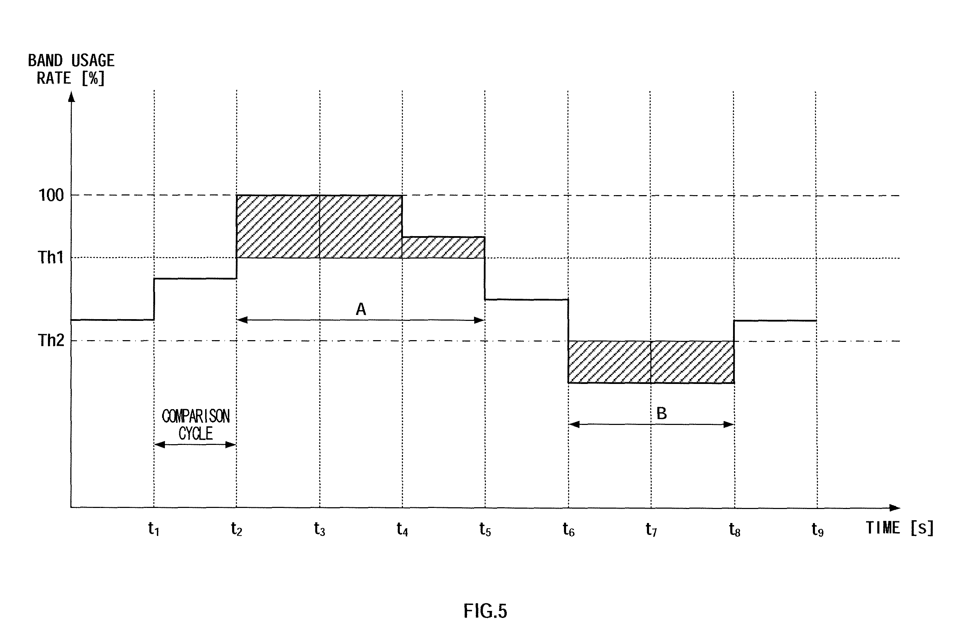

Next, an example of the operation of first upper limit setting section 110 will be described, referring to FIG.5. In the example shown in FIG. 5, band usage rate UR exceeds threshold value Th1 in period A from time $t_2$ to time $t_5$. In this case, it can be recognized that there is a possibility of congestion occurring on the wired transmission path if the current value of the FP rate is maintained. Therefore, in period A, the FP rate first upper limit is lowered so that it becomes possible to lower the FP rate.

In period B from time $t_6$ to time $t_8$, band usage rate UR is lower than threshold value Th2. In this case, it can be recognized that there is a margin in the wired transmission path band. Therefore, in period B, the FP rate first upper limit is raised so that it becomes possible to raise the FP rate.

In the example shown in FIG.5, band usage rate UR is greater than or equal to threshold value Th2 and less than or equal to threshold value Th1 in time periods other than those mentioned above. In these cases the FP rate first upper limit is not changed, making it possible to maintain the current value of the FP rate.

Thus, according to this embodiment, since the FP rate upper limit is set, associated with a wired transmission path, based on the result of measuring the usage state of the wired transmission path band, the FP rate can be set so that congestion does not occur on the wired transmission path, excessive retention or discarding of FP frames in packet transfer apparatus 20, for example, can be prevented, and throughput can be improved.

(Embodiment 2)

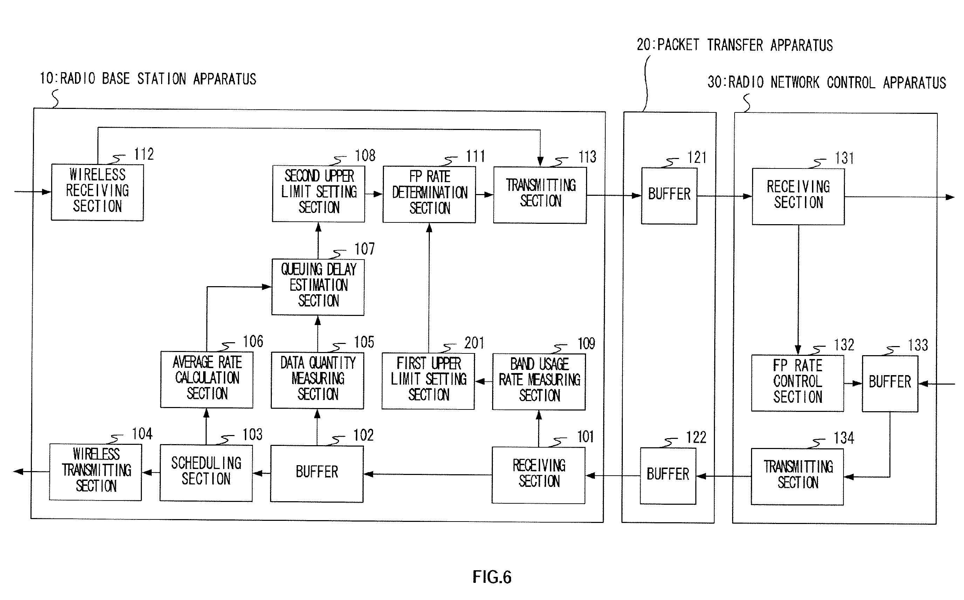

FIG.6 is a block diagram showing the configuration of a mobile communication system that includes a radio base station apparatus (base station) according to Embodiment 2 of the present invention. The apparatuses composing the mobile communication system described in this embodiment have the same basic configurations as described in Embodiment 1. Therefore, apparatuses and configuration elements identical to or corresponding to those described in Embodiment 1 are assigned the same reference codes, and detailed descriptions thereof are omitted. The only difference between this embodiment and Embodiment 1 is that base station 10 has a first upper limit setting section 201 instead of first upper limit setting section 110 described in Embodiment 1.

First upper limit setting section 201 sets an FP rate upper limit to be requested to control apparatus 30 based on a calculated band usage rate. As the upper limit set by first upper limit setting section 201 is based on the band usage rate of a wired transmission path, it is an upper limit corresponding to the wireless transmission path. Hereinafter, this upper limit is referred to as the "first upper limit," as in Embodiment 1.

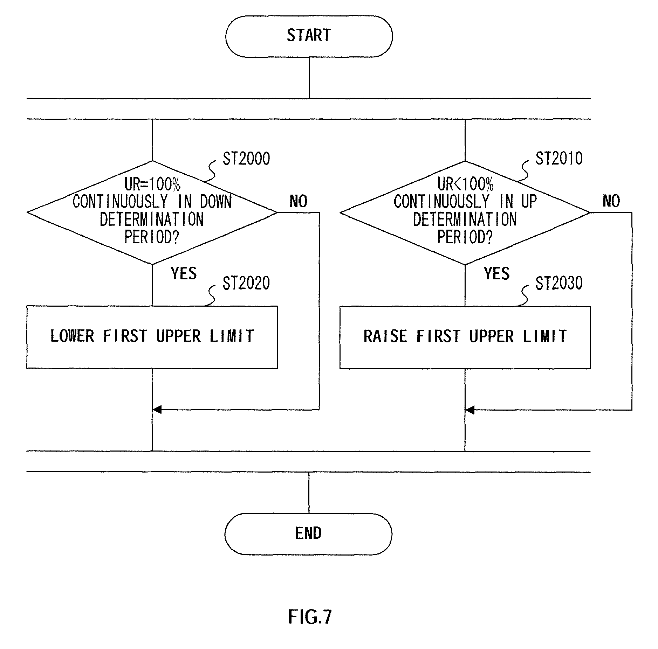

The operation of first upper limit setting section 201 will now be described. FIG.7 is a flowchart for explaining an FP rate upper limit change operation in first upper limit setting section 201.

First, in step ST2000, it is determined whether or not band usage rate UR is continuously 100% in a down determination period having a predetermined duration. In other words, in the down determination period, band usage rate UR is monitored by being compared with a threshold value of "100." Here, the duration of the down determination period is $\alpha$ times the comparison period (where $\alpha$ is a natural number).

Simultaneously with step ST2000, in step ST2010 it is determined whether or not band usage rate UR is continuously less than 100% in an up determination period having a predetermined duration. In other words, in the up determination period, band usage rate UR is monitored by being compared with a threshold value of "100." Here, the duration of the up determination period is $\beta$ times the comparison period (where $\beta$ is a natural number greater than $\alpha$).

If an affirmative result is obtained from the determination in step ST2000 (ST2000:YES), the FP rate first upper limit is lowered in step ST2020. On the other hand, if a negative result is obtained from the determination in step ST2000 (ST2000: NO), the FP rate first upper limit is not changed.

Also, if an affirmative result is obtained from the determination in step ST2010 (ST2010:YES), the FP rate first upper limit is raised in step ST2030. On the other hand, if a negative result is obtained from the determination in step ST2010 (ST2010: NO), the FP rate first upper limit is not changed. This series of processing steps is executed in a cycle (comparison cycle) having a predetermined duration. The comparison cycle should preferably be synchronized with the band usage rate UR calculation cycle.

As the first upper limit is changed in this way based on the result of monitoring band usage rate UR over a down determination period or up determination period longer than the comparison cycle, transfer rate setting can be performed in a stable fashion. Also, as the duration of the down determination period is shorter than the duration of the up determination period, it is possible for a change of the first upper limit associated with a rise of band usage rate UR to be performed with better tracking of fluctuation of band usage rate UR than a change of the first upper limit associated with a fall of band usage rate UR.

In this embodiment, the processing in step ST2000 and the processing in step ST2010 are performed simultaneously, but the order of processing is not limited to this. The same kind of operational effect as described above can be achieved if the processing in step ST2000 is executed before the processing in step ST2010, or if the processing in step ST2010 is executed before the processing in step ST2000.

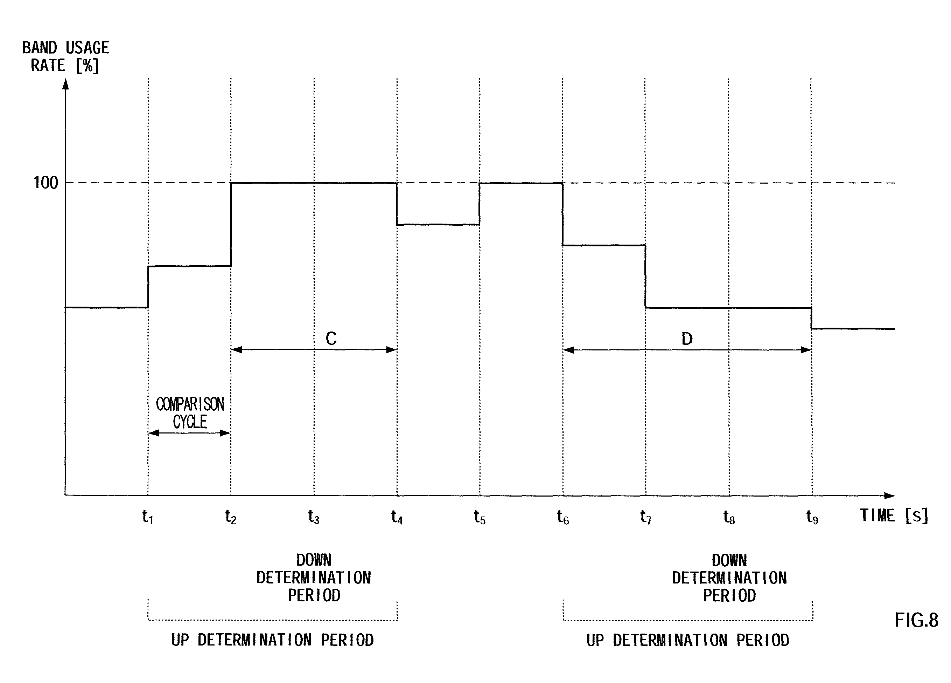

Next, an example of the operation of first upper limit setting section 210 will be described, referring to FIG.8. In the example shown in FIG.8, $\alpha=2$ and $\beta=3$.

In an up determination period from time $t_1$ to time $t_4$, band usage rate UR is not continuously less than 100%. However, in a down determination period from time $t_2$ to time $t_4$ (period C in the drawing), band usage rate UR is continuously 100%. In this case, it can be recognized that there is a possibility of congestion having already occurred on the wired transmission path. Therefore, at time $t_4$ the FP rate first upper limit is lowered so that it becomes possible to lower the FP rate.

In a down determination period from time $t_7$ to time $t_9$, band usage rate UR is not continuously 100%. However, in an up determination period from time $t_6$ to time $t_9$ (period D in the drawing), band usage rate UR is continuously less than 100%. In this case, it can be recognized that there is a margin in the wired transmission path band. Therefore, at time $t_9$ the FP rate first upper limit is raised so that it becomes possible to raise the FP rate.

In the example shown in FIG.8, the FP rate first upper limit is not changed at times other than those mentioned above.

Thus, according to this embodiment, since the FP rate upper limit is set, associated with a wired transmission path, based on the result of measuring the usage state of the wired transmission path band, as in Embodiment 1, the FP rate can be set so that congestion does not occur on the wired transmission path, excessive retention or discarding of FP frames in packet transfer apparatus 20, for example, can be prevented, and throughput can be improved.

The present application is based on Japanese Patent Application No.2004-099341 filed on March 30, 2004, the entire content of which is expressly incorporated herein by reference.

Industrial Applicability

A radio base station apparatus and data transfer control method of the present invention have an effect of improving throughput, and can be used to advantage in a mobile communication system in which a best effort type transmission scheme is applied to communication between a mobile terminal apparatus and a radio network control apparatus.

**Claims**

1. A radio base station apparatus that receives data transferred from a radio network control apparatus via a wired transmission path having a predetermined band and performs wireless transmission of the data to a mobile terminal apparatus via a wireless transmission path, comprising:

   a measuring section that measures a usage state of the band;
   a first upper limit setting section that sets a first upper limit of a transfer rate of the data, associated with the wired transmission path, based on a measurement result of the measuring section; and
   a determination section that determines the transfer rate based on a set first upper limit.

2. The radio base station apparatus of claim 1, further comprising:

   a storage section that temporarily stores received data;
   a data quantity measuring section that measures a quantity of data stored in the storage section;
   an average value calculation section that calculates an average value of a transmission rate of data transmitted by wireless transmission; and
   a second upper limit setting section that sets a second upper limit of the transfer rate, associated with the wireless transmission path, based on a quantity of data measured by the data quantity measuring section and an average value calculated by the average value calculation section;

   wherein the determination section performs determination of the transfer rate based on the smaller value of a set first upper limit and second upper limit.

3. The radio base station apparatus according to claim 1, wherein:

   the measuring section calculates a band usage rate of the wired transmission path as a result of measurement of a usage state of the band; and
   the first upper limit setting section raises a first upper limit when a calculated band usage rate is less than or equal to a first threshold value, and lowers a first upper limit when a calculated band usage rate is greater than or equal to a second threshold value;

4. The radio base station apparatus according to claim 3, wherein the measuring section measures throughput of the wireless transmission path, and performs band usage rate calculation by dividing that measurement result by a band of the wireless transmission path.

5. The radio base station apparatus according to claim 1, wherein:

   the measuring section calculates a band usage rate of the wired transmission path as a result of measurement of a usage state of the band; and
   the first upper limit setting section monitors a band usage rate calculated in a predetermined measurement cycle over a monitoring period having a length greater than or equal to the measurement cycle, and changes a first upper limit based on a result of that monitoring.

6. The radio base station apparatus according to claim 5, wherein:

   the first upper limit setting section performs determination of whether or not to lower a first upper limit based on a monitoring result in a first monitoring period, and performs determination of whether or not to raise a first upper limit based on a monitoring result in a second monitoring period; and
   a length of the first monitoring period is less than or equal to a length of the second monitoring period.

7. The radio base station apparatus according to claim 5, wherein the first upper limit setting section detects that a calculated band usage rate is continuously 100% by performing band usage rate monitoring.

8. The radio base station apparatus according to claim 5, wherein the first upper limit setting section detects that a calculated band usage rate is continuously less than 100% by performing band usage rate monitoring.

9. The radio base station apparatus according to claim 5, wherein the measuring section measures throughput of the wireless transmission path, and performs band usage rate calculation by dividing that measurement result by a band of the wireless transmission path.

10. A data transfer control method implemented in a radio base station apparatus that receives data transferred from a radio network control apparatus via a wired transmission path having a predetermined band and performs wireless transmission of the data to a mobile terminal apparatus via a wireless transmission path, comprising:

   a measuring step of measuring a usage state of the band;
   a first upper limit setting step of setting a first upper limit of a transfer rate of the data, associated with the wired transmission path, based on a measurement result of the measuring step; and
   a determining step of determining the transfer rate based on a first upper limit set in the first upper limit setting step.

PRIOR ART

FIG.1

PRIOR ART

FIG.2

FIG.3

EP 1 732 340 A1

FIG.4

11

FIG.5

EP 1 732 340 A1

FIG.6

FIG.7

FIG.8

BAND USAGE
RATE [%]

100

C

D

COMPARISON
CYCLE

t₁  t₂  t₃  t₄  t₅  t₆  t₇  t₈  t₉   TIME [s]

DOWN
DETERMINATION
PERIOD

DOWN
DETERMINATION
PERIOD

UP DETERMINATION PERIOD

UP DETERMINATION PERIOD

EP 1 732 340 A1

## INTERNATIONAL SEARCH REPORT

| International application No. |
| --- |
| PCT/JP2005/004671 |

**A. CLASSIFICATION OF SUBJECT MATTER**
Int.Cl⁷ H04Q7/38, H04L29/08, H04Q7/36

According to International Patent Classification (IPC) or to both national classification and IPC

**B. FIELDS SEARCHED**

Minimum documentation searched (classification system followed by classification symbols)
Int.Cl⁷ H04Q7/00-7/38, H04B7/26

Documentation searched other than minimum documentation to the extent that such documents are included in the fields searched
Jitsuyo Shinan Koho          1922-1996   Jitsuyo Shinan Toroku Koho    1996-2005
Kokai Jitsuyo Shinan Koho    1971-2005   Toroku Jitsuyo Shinan Koho    1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2000-78146 A  (Nippon Telegraph And Telephone Corp.),<br>14 March, 2000 (14.03.00),<br>Full text<br>(Family: none) | 1,3-5,7-10<br>2,6 |
| A | JP 2002-171572 A  (Hitachi, Ltd.),<br>14 June, 2002 (14.06.02),<br>Par. No. [0020]<br>& US 2002/068588 A1      & CN 1356794 A<br>& KR 409162 B | 2 |
| P,A | JP 2004-304636 A  (Matsushita Electric Industrial Co., Ltd.),<br>28 October, 2004 (28.10.04),<br>Full text<br>& WO 2004/089028 A1 | 1-10 |

☒ Further documents are listed in the continuation of Box C.       ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>14 June, 2005 (14.06.05) | Date of mailing of the international search report<br>12 July, 2005 (12.07.05) |
| --- | --- |
| Name and mailing address of the ISA/<br>Japanese Patent Office | Authorized officer |
| Facsimile No. | Telephone No. |

Form PCT/ISA/210 (second sheet) (January 2004)

## INTERNATIONAL SEARCH REPORT

| | International application No. |
|---|---|
| | PCT/JP2005/004671 |

C (Continuation). DOCUMENTS CONSIDERED TO BE RELEVANT

| Category* | Citation of document, with indication, where appropriate, of the relevant passages | Relevant to claim No. |
|---|---|---|
| P,A | JP 2005-57323 A  (NTT Docomo Inc.),<br>03 March, 2005 (03.03.05),<br>Full text<br>(Family: none) | 1-10 |
| A | JP 2004-64224 A  (Iwatsu Electric Co., Ltd.),<br>26 February, 2004 (26.02.04),<br>Claim 1<br>(Family: none) | 1-10 |
| A | JP 2000-278325 A  (Sanyo Electric Co., Ltd.),<br>06 October, 2000 (06.10.00),<br>Abstract<br>(Family: none) | 1-10 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004099341 A